# EUROPÄISCHE PATENTSCHRIFT

(11) **EP 3 895 968 B1**
(45) Veröffentlichungstag und Bekanntmachung des Hinweises auf die Patenterteilung: **15.02.2023**
(21) Anmeldenummer: 21168726.4
(22) Anmeldetag: 15.04.2021
(51) Int. Cl.: B62K 27/12, A47C 4/44, B62B 9/00, B62B 5/08

(54) **SITZANORDNUNG**
SEAT ASSEMBLY
AGENCEMENT DE SIÈGE

(30) Priorität: 15.04.2020 DE 202020102085 U; 21.08.2020 DE 202020104869 U; 14.01.2021 DE 202021100157 U
(43) Veröffentlichungstag der Anmeldung: 20.10.2021
(73) Patentinhaber: Croozer GmbH, 50354 Hürth (DE)
(72) Erfinder: GEHLEN, Andreas, 50829 Köln (DE)
(74) Vertreter: Lenzing Gerber Stute

(56) Entgegenhaltungen:
- CN-Y- 201 354 126
- US-A- 5 785 333
- US-A1- 2004 178 665

## Beschreibung

Die vorliegende Erfindung betrifft eine Sitzanordnung für den Transport von Personen, insbesondere von Kindern, Kleinkindern und Babys, in einer Fahrgastzelle eines Fahrzeugs, insbesondere eines Multifunktions-Fahrradanhängers mit einer Matte und mindestens einem hinteren Spannelement, das an einem in Fahrrichtung hinteren Bereich der Matte angreift und ausgebildet ist, um am Fahrzeug mittelbar oder unmittelbar gegengelagert zu werden und die Matte in einer Längsrichtung zu spannen, mindestens einem vorderen Spannelement, das an einem in Fahrrichtung vorderen Bereich der Matte angreift und ausgebildet ist, um am Fahrzeug mittelbar oder unmittelbar gegengelagert zu werden und die Matte in einer Längsrichtung zu spannen, sowie mindestens einem mittleren Spannelement, das eingerichtet ist, am Fahrzeug mittelbar oder unmittelbar gegengelagert zu werden und auf die Matte eine Zugkraft auszuüben, die quer zu den von dem mindestens einen hinteren Spannelement und dem mindestens einen vorderen Spannelement ausgeübten Zugkräften wirkt. Sie betrifft auch einen Anhänger für ein Fahrzeug mit einer solchen Sitzanordnung, insbesondere für ein Fahrrad oder ein Pedelec, aber auch Lastenfahrräder mit einem Ladebereich und einer darin verankerten Sitzanordnung.

Fahrradanhänger, insbesondere solche für den Transport von Kindern, erfreuen sich zunehmender Beliebtheit. Es gibt Kinderfahrradanhänger, die ein Chassis und eine Fahrgastzelle aufweisen, in der je nach Größe des Anhängers ein Einzelsitz oder ein Doppelsitz zum Transport eines oder zweier Kinder vorgesehen ist. Das Chassis wird üblicherweise durch eine Rahmenkonstruktion gebildet, kann aber beispielsweise auch aus einer Wanne aus Kunststoff oder Aluminium bestehen. An das Chassis ist dann meist eine faltbare, die Fahrgastzelle bildende Rahmenkonstruktion montiert, wobei dann Fahrgastzelle bzw. Chassis und Fahrgastzelle von einem oder mehreren flexiblen Stoffen oder Folien umspannt sind. Die Sitze sind beispielsweise in der Fahrgastzelle verspannte Tuchsitze, oder sie sind als Schalensitze ausgebildet und seitlich in der Fahrgastzelle verankert. Ein Kinderfahrradanhänger mit verspanntem Tuchsitz ist beispielsweise in der EP 1 398 260 A2 offenbart. Allen Anhängern ist gemeinsam, dass sie vergleichsweise leicht gebaut sind und ein Verhältnis von aufnehmbarer Last zu Eigengewicht von deutlich mehr als 2 haben.

Es gibt auch Kinderfahrradanhänger mit Kindersitzen, deren Rückenlehne verstellbar ist. Ein einfaches Beispiel hierfür ist aus der deutschen Gebrauchsmusterschrift DE 92 15 797.1 bekannt. Darin ist ein Lastenanhänger mit einer Ladefläche sowie seitlichen, die Ladefläche eingrenzenden Wandungen offenbart. In den durch die Seitenwandungen gebildeten Ecken sind Verankerungen vorgesehen, in denen ein sogenannter Überrollbügel lösbar befestigt werden kann. Am Überrollbügel sind verschiedene Befestigungspunkte vorgesehen, derart, dass ein Kindersitz in den Überrollbügel eingehängt werden kann, wobei die Position der Rückenlehne zur Sitzfläche des Kindersitzes einstellbar ist. Für den Transport von Babys, die in einer Liege-/Sitzposition transportiert werden müssen, sind die bekannten Sitze mit verstellbarer Rückenlehne jedoch nicht geeignet.

Aus der EP 1 398 262 A2 ist eine von der Anmelderin entwickelte elastische Babyschale für den Transport von Babys bekannt. Sie besteht im Wesentlichen aus einer flexiblen Matte mit mindestens im Gesäßbereich eingenähten Seitenwandungen, die dreidimensional im Gestell eines Fahrradanhängers verspannt werden kann und so eine geeignete Form für den sicheren Transport eines Babys bildet. Die elastische Babyschale wird üblicherweise zusätzlich und oberhalb eines bereits im Fahrradanhänger befindlichen Kindersitzes eingesetzt.

Sitze für Fahrradanhänger, die gleichermaßen für den Transport von Babys, Kleinkindern und Kindern verwendbar sind, sind bislang nicht bekannt. Dokument CN 201 354 126 Y offenbart den Oberbegriff des Anspruchs 1.

Aufgabe der Erfindung ist es, eine Sitzvorrichtung der eingangs genannten Art mit einer verbesserten Funktionalität bereit zu stellen.

Diese Aufgabe wird zum einen mit einer Sitzanordnung der eingangs genannten Art gemäß Anspruch 1 dadurch gelöst, dass, insbesondere als vorderes Spannelement, mindestens ein in Fahrtrichtung vorderer Arm vorgesehen ist, der mittelbar oder unmittelbar und insbesondere lösbar am Fahrzeug verankert ist und um eine quer zur Fahrtrichtung verlaufende Achse verschwenkbar ist, wobei ein von der Schwenkachse beabstandeter Bereich des Arms mit dem in Fahrtrichtung vorderen Bereich der Matte verbunden ist. Alternativ oder ergänzend zum vorderen Arm kann, insbesondere als hinteres Spannelement, mindestens ein in Fahrtrichtung hinterer Arm vorgesehen sein, der mittelbar oder unmittelbar am Fahrzeug verankert ist und um eine quer zur Fahrtrichtung verlaufende Achse verschwenkbar ist, wobei ein von der Schwenkachse beabstandeter Bereich mit dem in Fahrtrichtung hinteren Bereich der Matte verbunden ist. Funktionsweise und Vorteile des mindestens einen hinteren Arms sind die gleichen wie die des mindestens einen vorderen Arms.

Unter einem Spannelement wird hier und im Folgenden ein Element verstanden, dass geeignet ist, Zugspannungen aufzunehmen, um die Matte in einer bestimmten dreidimensionalen Anordnung zu halten bzw. aufzuspannen.

Die Matte ist ein flächiges Material, vorzugsweise ein Gewebe, das flexibel ist, so dass es einerseits gut verspannt werden kann. Die Flexibilität der Matte ermöglicht andererseits, dass sich die Form der durch die Matte gebildeten Stützflächen gut an die Körperform der zu transportierenden Person anpassen kann. Im Prinzip reicht es aber aus, wenn die Matte im Bereich des Übergangs von der Sitzfläche zur Rückenlehne flexibel ist, so dass sich der Sitzwinkel frei einstellen lässt.

Die Matte wird durch die Spannelemente in zwei Stützbereiche unterteilt, nämlich einen in Fahrtrichtung vorderen Stützbereich, der sich von der Vorderkante der Sitzanordnung bis zu dem bzw. den Angriffspunkten des mindestens einen mittleren Spannelements an der Matte erstreckt, und einen in Fahrtrichtung hinteren Stützbereich, der sich von eben diesem bzw. diesen Angriffspunkten der mittleren Spannelemente an der Matte bis zu den Angriffspunkten des mindestens einen hinteren Spannelements an der Matte erstreckt. Der mindestens eine Arm hat dabei nicht nur den Vorteil, dem vorderen Bereich der Matte eine besondere Stabilität zu verleihen, sondern insbesondere den Vorteil, die Vorderkante des vorderen Stützbereichs in unterschiedlichen Höhen festsetzen bzw. in einer bevorzugten teleskopierbaren Ausführungsform gleichzeitig die Länge der Sitzfläche einstellen zu können.

Mit der erfindungsgemäßen Sitzanordnung ist es möglich, die beiden Stützbereiche in eine Ebene zu bringen, ebenso wie es möglich ist, sie in einem etwa rechten Winkel zueinander anzuordnen. Im Prinzip ist der Winkel zwischen den Stützbereichen frei wählbar, wenn beispielsweise als hintere(s) und mittlere(s) Spannelement(e) längenverstellbare Gurte eingesetzt werden. Dementsprechend kann als Sitzvariante auch eine Liegesitzposition konfiguriert werden, in der der Winkel zwischen den Stützbereichen etwa 120° bis 150° beträgt, was insbesondere den Transport von schlafenden Kindern bzw. Babys ermöglicht. Dabei muss einer der Stützbereiche noch nicht einmal horizontal angeordnet sein, es ist auch eine Anordnung möglich, bei der der Zwickel zwischen den Stützbereichen deutlich niedriger als die Vorderkante und die Hinterkante der Sitzanordnung ist. Des Weiteren ist es möglich, wahlweise den vorderen oder hinteren Stützbereich aufrechter zu stellen als den jeweils anderen Stützbereich, wobei der jeweils aufrechtere Bereich als Rückenlehne und der jeweils flachere Bereich als Sitzfläche dienen kann. Somit kann ein Sitzen in Fahrtrichtung als auch entgegen der Fahrtrichtung ermöglicht werden. Das ist insbesondere beim Transport von Kleinkindern und Babys in Multifunktions-Fahrradanhängern von Vorteil, die sowohl als Fahrradanhänger von vorn gezogen als auch als Kinderwagen von hinten geschoben werden, womit das transportierte Kleinkind oder Baby immer der Person, die es befördert, zugewandt sein kann.

Durch die Verwendung eines Arms, also eines gegenüber beispielsweise Spanngurten vergleichsweise starren Konstruktionselements, kann gewährleistet werden, dass auch größere Lasten als die von Babys und Kleinkindern sicher von der Sitzanordnung aufgenommen werden. Dies ist insbesondere dann der Fall, wenn als vorderes und/oder hinteres Spannelement jeweils zwei Arme vorgesehen sind, die jeweils Bestandteil eines u-förmigen Bügels sind, wobei der die beiden Arme verbindende Abschnitt des Bügels die in Fahrtrichtung vordere Kante bzw. die in Fahrtrichtung hintere Kante der Sitzanordnung definiert. Alternativ ist es genauso möglich, die Matte zwischen zwei seitlichen Armen zu verspannen, so dass eine an der Vorderkante bzw. Hinterkante der Sitzanordnung verlaufende, die Arme miteinander verbindende Querstrebe nicht notwendig ist. Es reicht im Prinzip auch aus, wenn lediglich ein Arm vorgesehen ist, der an seinem freien Ende einen quer verlaufenden Steg aufnimmt, der die Vorderkante bzw. Hinterkante des Sitzes definiert. Eine solche Konstruktion müsste allerdings sehr verwindungssteif sein.

Der bzw. die vorderen und/oder hinteren Arme können beispielsweise durch mindestens ein Rastmittel im Drehgelenk in mindestens einer, vorzugsweise zwei oder auch mehreren Winkelpositionen gesichert werden. Alternativ oder in Ergänzung hierzu ist es auch möglich und sinnvoll, die in Fahrtrichtung vordere Kante der Sitzeinrichtung am Fahrzeug und vorzugsweise am Chassis mit einem Spanngurt nach unten abzuspannen, so dass die Winkelposition des bzw. der Arme durch diese Verspannung im Zusammenwirken der Verspannung der Matte durch das mindestens eine hintere und mittlere Spannelement festgelegt ist. Dementsprechend ebenso bevorzugt ist es, wenn das hintere Spannelement mindestens einen Spanngurt aufweist, der mit der in Fahrtrichtung hinteren Kante der Sitzanordnung verbunden ist und so eingerichtet ist, um am Fahrzeug mittelbar oder unmittelbar gegengelagert, beispielsweise nach unten verspannt zu werden.

Der mindestens eine vordere und der mindestens eine hintere Arm sind vorzugsweise gelenkig und insbesondere feststellbar miteinander verbunden.

In einer bevorzugten Ausführungsform dieser Sitzanordnung ist die Länge des mindestens einen vorderen und/oder hinteren Arms verstellbar. Dadurch wird es möglich, die Länge sowohl der vorderen Stützfläche als auch der Rückenlehne unabhängig voneinander individuell einzustellen und so an die Größe der zu transportierenden Person anzupassen. So kann die Sitzanordnung beispielsweise mit einem Kind "mitwachsen". Es kann aber auch lediglich die Position der Vorderkante der vorderen Stützfläche im Fahrzeug in die Horizontale und/oder Vertikale verlagert werden.

Der mindestens eine Arm selbst kann drehbar am Fahrzeug, beispielsweise an dessen Chassis, verankert sein. Vorzugsweise ist er aber mittelbar am Fahrzeug verankert, z.B. über mindestens einen den Arm tragenden Pfosten, der wiederum wahlweise mittelbar oder unmittelbar am Fahrzeug, beispielsweise am Chassis, gegebenenfalls aber auch an tragenden Teilen der Fahrgastzelle, verankert sein kann.

Es kann darüber hinaus sinnvoll sein, mindestens einen, bevorzugt aber an jeder Seite der Matte angeordneten längsseitigen, insbesondere längenverstellbaren Gurt vorzusehen, der zwischen der vorderen Stützfläche und der hinteren Stützfläche verläuft, durch dessen Länge die Öffnung des Sitzwinkels zwischen vorderer und hinterer Stützfläche bestimmt wird, wenn die vordere bzw. die hintere Kante der Sitzanordnung nach unten abgespannt werden.

Um einem Herausrutschen einer zu transportierenden Person aus der Sitzanordnung entgegenzuwirken, ist es sinnvoll, wenn die Sitzanordnung seitliche Wandungen aufweist. Das ist aber nicht zwingend notwendig. So ist es im Prinzip möglich, eine zu transportierende Person beispielsweise durch 5-Punkt-Sicherheitsgurte in der Sitzanordnung gegen ein seitliches Herausrutschen zu sichern. Da eine Seitenwandung als Bestandteil einer erfindungsgemäßen Sitzanordnung an verschiedene Positionen der beiden Stützflächen zueinander anpassbar sein sollte, ist es sinnvoll, wenn die Seitenwandung aus einem z.B. ziehharmonikaartig gefalteten und/oder elastischen Material besteht, welches zwischen dem insbesondere längenverstellbaren Gurt zwischen den beiden Stützflächen angeordnet ist. Alternativ oder in Ergänzung hierzu kann es sinnvoll sein, mindestens einen längenverstellbaren Gurt vorzusehen, der eine im Prinzip senkrechte Verbindung zwischen dem längenverstellbaren Gurt, der von der Sitzfläche zur Rückenlehne verläuft, und der Sitzfläche bzw. der Rückenlehne selber herstellt.

Bei der erfindungsgemäßen Sitzanordnung ist es auch möglich und gegebenenfalls sinnvoll, Feder- und/oder Dämpfungselemente im Bereich der Verankerung des mindestens einen Arms am Fahrzeug vorzusehen, mit denen vom Fahrzeug bzw. dem Anhänger auf die Sitzanordnung übertragene Stöße gedämpft bzw. abgefedert werden. Die Federung bzw. Dämpfung kann z.B. in Pfosten vorgesehen sein, über die der Arm am Fahrzeug befestigt sind.

Die erfindungsgemäße Sitzanordnungen eignet sich insbesondere für Anhänger, insbesondere für Multifunktionsanhänger, für Fahrräder und Pedelecs, sofern diese die notwendigen Verankerungs- und Gegenlagerpunkte für die Sitzanordnung haben. Sie eignet sich aber im Prinzip auch für Lastenfahrräder, deren Ladebereich mit den notwendigen Verankerungs- und Gegenlagerpunkten für die Sitzanordnung ausgestattet ist und ggf. auch eine Fahrgastzelle aufweist.

Im Folgenden wird die Erfindung anhand von Figuren, in denen bevorzugte Ausführungsbeispiele der Erfindung dargestellt sind, näher erläutert.

Es zeigen
- Fig. 1: eine Skizze mit einer erfindungsgemäßen Sitzanordnung, die in einem Fahrradanhänger verspannt ist;
- Fig. 2: eine Skizze zur Verspannung der in Figur 1 gezeigten Sitzanordnung in einer anderen Position;
- Fig. 3: eine Skizze mit einer erfindungsgemäßen Sitzanordnung, die in einer alternativen Konstruktion einer Fahrgastzelle eines Fahrradanhängers eingebracht ist, in welcher das Kind in einer der Fahrtrichtung entgegengesetzten Position sitzt; und
- Fig. 4: eine Skizze zu einer alternativen Sitzanordnung nach Figur 3, in der das Kind entgegen der Fahrtrichtung sitzt und die in einem Fahrradanhänger gegen das Chassis verspannt ist.

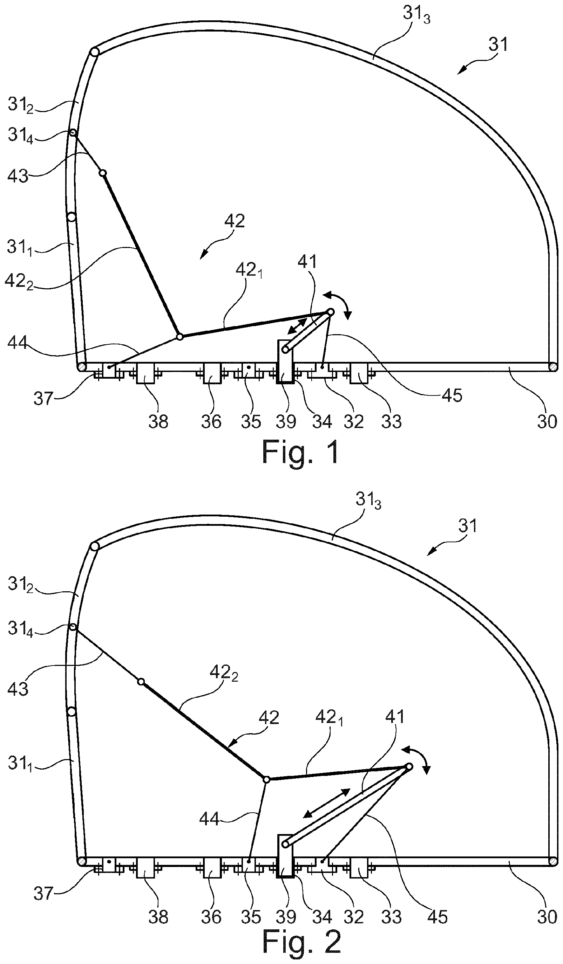

Figur 1 zeigt einen in Teilen dargestellten Anhänger, beispielsweise einen Fahrradanhänger, mit einem Chassis 30 und einer darauf aufgesetzten, faltbaren Fahrgastzelle 31. Die Fahrgastzelle 31 weist zwei hintere Rahmenelemente 31₁ und 31₂ sowie ein die Fahrgastzelle vorn und oben begrenzendes Rahmenelement 31₃ auf. Das Chassis weist in den Boden eingelassene, in Fahrtrichtung quer nebeneinander in Reihen angeordnete, chassis-seitige Kupplungselemente 33, 34, 36, 38 sowie ebenso nebeneinander in Reihen angeordnete quadratische Hülsen mit Quersteg auf 32, 35, 37, mit einer vorderen Reihe quadratischer Hülsen 32 zwischen der ersten und der zweiten Reihe chassis-seitiger Kupplungselemente 33, 34, einer mittleren Reihe quadratischer Hülsen 35 zwischen der zweiten und der dritten Reihe chassis-seitiger Kupplungselemente 34, 36 und einer letzten Reihe quadratischer Hülsen 37 hinter der letzten Reihe chassis-seitiger Kupplungselemente 38. In zwei der chassis-seitigen Kupplungselemente 34 der zweiten Reihe sind zwei niedrige Pfosten 39 eingesetzt. Die Pfosten weisen an ihrem unteren Ende einen hier nicht dargestellten, mit dem chassis-seitigen Kupplungselement zusammenwirkenden, lösbaren Schnellverschluss als sitzanordnungs-seitiges Kupplungselement auf. Beide Pfosten 39 tragen einen in Fahrtrichtung vorderen U-förmigen Bügel 41, der an den Pfosten 39 um eine Achse quer zur Fahrtrichtung verschwenkbar ist. Die freien, parallel zur Fahrtrichtung sich erstreckenden Enden des U-förmigen Bügels 41 sind teleskopierbar.

Die Pfosten 39 und der Bügel 41 sind Bestandteil einer erfindungsgemäßen Sitzanordnung zum Transport eines Kindes oder eines Babys. Am Bügel 41 ist das vordere Ende einer Matte 42 für eine Körperaufnahme befestigt. Das in Fahrtrichtung hintere Ende dieser Matte 42 ist über spannbare Gurte als hintere Spannelemente 43 an einer im hinteren Rahmenelement 31₂ quer verlaufenden Strebe 31₄ verspannt. Im Bereich des Übergangs der Matte 42 von der vorderen Stützfläche 42₁ - hier in der Funktion einer Sitzfläche - zur hinteren Stützfläche 42₂ - hier in der Funktion einer Rückenlehne - ist sie rückwärtig nach unten und hinten mit Spanngurten 44 als mittlere Spannelemente verspannt, die an einem oder mehreren Querstegen der Hülsen 37 gegengelagert sind. Schließlich ist die Matte 42 über den Bügel 41 verspannt, dessen Vorderkante über Spanngurte 45, die an einem oder mehreren Querstegen der Hülsen 32 gegengelagert sind, abgespannt ist. Bügel 41 und Abspanngurte 45 bilden hier vordere Spannelemente. Die hier dargestellte Sitzposition ist vergleichsweise aufrecht, der Winkel zwischen Sitzfläche und Rückenlehne beträgt etwa 100°.

In Figur 2 ist der in Figur 1 dargestellte Pfosten 39 an gleicher Stelle im Boden des Chassis eingesetzt. Allerdings sind die freien Schenkel des u-förmigen, parallel zur Fahrtrichtung teleskopierbaren Bügels 41 ein Stück weit ausgefahren, so dass die Position der Vorderkante der Sitzfläche in Fahrtrichtung nach vorn und nach oben verschoben ist, ebenso wie der Bereich des Übergangs von der Sitzfläche 42₁ zur Rückenlehne 42₂. Die Spanngurte (44, 45) zum Abspannen dieses Bereichs sind nun an den Querstegen der Hülsen 35 und 32 gegengelagert. In dieser Anordnung ergibt sich eine Liegesitzposition, die aufgrund des deutlich größeren Winkels zwischen Sitzfläche und Rückenlehne insbesondere für den Transport von Babys geeignet ist.

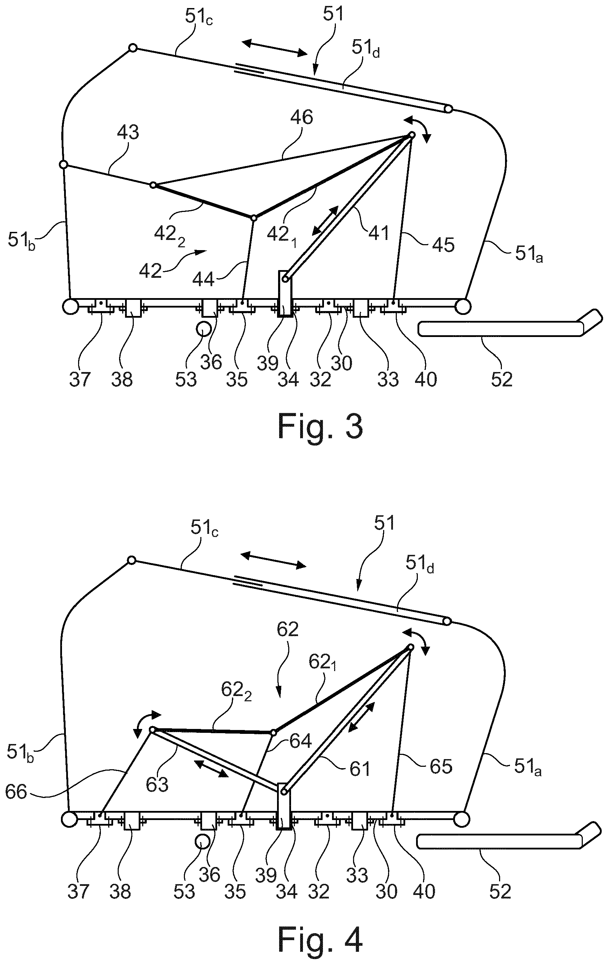

In Figur 3 ist ein alternativer Aufbau einer faltbaren Fahrgastzelle 51 gezeigt. Diese Fahrgastzelle weist einen vorderen Teilrahmen 51a, einen hinteren Teilrahmen 51_{b} und einen mittleren Teilrahmen aus den ineinander teleskopierbaren Teilrahmen 51_{c} und 51_{d} auf mit einer ähnlichen wie in Figur 2 gezeigten Sitzanordnung (gleiche Bezugsziffern bezeichnen gleiche Elemente), wobei sich die Fahrtrichtung durch die Lage der Deichsel 52 (vorn) und der Radachsenaufnahme 53 (hinten) ergibt. In der dargestellten Anordnung sind die Arme des U-förmigen Bügels 41 noch weiter ausgefahren, so dass die Vorderkante der vorderen Stützfläche 42₁ höher ist als die hintere Kante der hinteren Stützfläche 42₂, wobei die spannbaren Gurte 43 zum Verspannen der hinteren Stützfläche 42₂ in Höhe der Mitte des hinteren Rahmenteils 31ₐ an einem am hinteren Teilrahmen 51b angeordneten Querträger der Fahrgastzelle verspannt ist. Die Verspannung der vorderen Stützfläche erfolgt z.B. über einen an der Vorderkante des Arms 41 befestigten und bevorzugt längenverstellbaren Gurt 45, welcher an der zusätzlichen im Chassis vorhandenen Hülse 40 gegengelagert ist. Darüber hinaus verlaufen zwischen der Vorderkante der vorderen Stützfläche 41₁ und der hinteren Kante der hinteren Stützfläche 41₂ seitliche, längenverstellbare Gurte 46, mit denen die Lage der Kanten bzw. der Winkel beider Stützflächen zueinander genau definiert und stabilisiert werden kann. In dieser Anordnung dient die vordere Stützfläche 42₁ als Rückenlehne und die hintere Stützfläche 42₂ als (Liege-)Sitzfläche, die Transportposition für ein Kleinkind oder Baby ist hier gegenüber der Anordnung in Figur 2 umgedreht und befindet sich entgegengesetzt zur Fahrtrichtung.

Die in Figur 4 dargestellte Sitzanordnung ist in dem gleichen Anhänger wie Figur 3 mit einem Chassis 30 und einer darauf aufgesetzten, faltbaren Fahrgastzelle 51 verspannt. Sie unterscheidet sich von den Sitzanordnungen der Figuren 1 bis 3 im Wesentlichen dadurch, dass nicht nur ein vorderer u-förmiger Bügel 61 als vorderes Spannelement vorgesehen ist, sondern auch ein hinterer u-förmiger Bügel 63. Beide Bügel sind verschwenkbar am Pfosten 39 gelagert und in ihrer Länge parallel zur Längsachse des Fahrzeugs verstellbar. Sie können außerdem in einer Winkelposition zueinander durch einen Rastmechanismus oder einen anderen Mechanismus feststellbar sein, dies ist aber nicht zwingend notwendig. Die Matte 62 erstreckt sich mit ihrem vorderen Stützbereich 62₁ und ihrem hinteren Stützbereich 62₂ zwischen der durch den vorderen U-förmigen Bügel 61 definierten Vorderkante der Sitzanordnung und der durch den hinteren U-förmigen Bügel 63 definierten Hinterkante der Sitzanordnung, wobei die Bügel 61, 63 durch Spanngurte 66, 67, die in den quadratischen Hülsen 37, 40 am Chassis des Anhängers gegengelagert sind, nach unten verspannt sind. Außerdem ist die Matte 62 in einem mittleren Bereich durch Spanngurte 64, die in quadratischen Hülsen 35 gegengelagert sind, nach unten verspannt. Die Anordnung ist derart, dass der vordere Stützbereich aufrechter als der vergleichsweise flach angeordnete hintere Stützbereich ist. Da der Winkel der beiden Stützbereiche zueinander relativ flach ist, ist diese Sitzanordnung mit dem Rücken zur Fahrtrichtung insbesondere zum Transport von Kleinkindern und Babys geeignet, wenn der Anhänger in einer Funktion als Kinderwagen geschoben wird.

Die Sitzanordnungen sind vorzugsweise mit hier nicht dargestellten Seitenwandungen versehen, die einem seitlichen Herausrutschen des Kindes bzw. Babys entgegenwirken. Die Seitenwandungen können beispielsweise jeweils aus einem elastischen oder in sich gefalteten Textilmaterial bestehen, dessen Unterkante an der Matte und dessen Oberkante mit einem elastischen und/oder längenverstellbaren Gurt verbunden ist, dessen eines Ende an einem vorderen seitlichen Bereich der Seitenkante der Sitzfläche und dessen anderes Ende in einem oberen Bereich der seitlichen Kante der Rückenlehne befestigt ist. Auch ist es im Prinzip möglich, starre seitliche Wandlungen als Funktionsmodule am Boden des Chassis 30 zu verankern.

Weiterhin können die in den Figuren 1 bis 4 gezeigten Spanngurte 43, 44, 45, 64, 65, 66 auch durch starre Elemente - beispielsweise stufenlos teleskopierbare Streben - ersetzt werden, welche dann ein entsprechendes Gegenlager für die Vorder- und Hinterkante der Matte als Spannelemente bilden, mit denen die Matte in ihre Transportform aufgespannt und stabilisiert wird.

## Patentansprüche

1. Sitzanordnung für den Transport von Personen, insbesondere von Babys, Kleinkindern und Kindern, in einer Fahrgastzelle eines Fahrzeugs, insbesondere eines Multifunktions-Fahrradanhängers, mit einer Matte (42, 62) und mindestens einem hinteren Spannelement (43, 63, 66), das an einem in Fahrrichtung hinteren Bereich der Matte angreift und ausgebildet ist, um am Fahrzeug mittelbar oder unmittelbar gegengelagert zu werden und die Matte in einer Längsrichtung zu spannen, mindestens einem vorderen Spannelement (41, 45, 61, 65) , das an einem in Fahrrichtung vorderen Bereich der Matte angreift und ausgebildet ist, um am Fahrzeug mittelbar oder unmittelbar gegengelagert zu werden und die Matte in einer Längsrichtung zu spannen, sowie mindestens einem mittleren Spannelement (44, 64), das eingerichtet ist, um am Fahrzeug mittelbar oder unmittelbar gegengelagert zu werden und auf die Matte eine Zugkraft auszuüben, die quer zu den von dem mindestens einen hinteren Spannelement und dem mindestens einen vorderen Spannelement ausgeübten Zugkräften wirkt, **dadurch gekennzeichnet, dass** mindestens ein in Fahrtrichtung vorderer (41, 61) und/oder hinterer Arm (63) vorgesehen ist, der mittelbar oder unmittelbar und insbesondere lösbar am Fahrzeug verankert ist, um eine quer zur Fahrtrichtung verlaufende Achse verschwenkbar ist, wobei ein von der Schwenkachse beabstandeter Bereich des vorderen Arms (41, 61) mit dem in Fahrtrichtung vorderen Bereich der Matte bzw. ein von der Schwenkachse beabstandeter Bereich des hinteren Arms (63) mit dem in Fahrtrichtung hinteren Bereich der Matte verbunden ist.

2. Sitzanordnung nach Anspruch 1, **dadurch gekennzeichnet, dass** das vordere Spannelement und/oder das hintere Spannelement jeweils zwei Arme aufweist, die Bestandteile eines u-förmigen Bügels (41, 61, 63) sind, wobei ein die beiden Schenkel des Bügels (41, 61, 63) verbindender Abschnitt die in Fahrtrichtung vordere Kante der Sitzanordnung bzw. die in Fahrtrichtung hintere Kante der Sitzanordnung definiert.

3. Sitzanordnung nach Anspruch 2, **dadurch gekennzeichnet, dass** der oder die vorderen und/oder hinteren Arme in mindestens zwei verschiedenen Winkelpositionen feststellbar sind.

4. Sitzanordnung nach einem der vorstehenden Ansprüche, **dadurch gekennzeichnet, dass** das vordere Spannelement mindestens einen längenverstellbaren Stab oder Spanngurt (45, 65) aufweist, der mit der in Fahrtrichtung vorderen Kante der Sitzanordnung verbunden ist und eingerichtet ist, am Fahrzeug mittelbar oder unmittelbar gegengelagert zu werden.

5. Sitzanordnung nach einem der Ansprüche 1 bis 4, **dadurch gekennzeichnet, dass** das hintere Spannelement mindestens einen längenverstellbaren Stab oder Spanngurt (43, 66) aufweist, der mit der in Fahrtrichtung hinteren Kante der Sitzanordnung verbunden ist und eingerichtet ist, am Fahrzeug mittelbar oder unmittelbar gegengelagert zu werden.

6. Sitzanordnung nach einem der vorstehenden Ansprüche, **dadurch gekennzeichnet, dass** das mittlere Spannelement mindestens einen längenverstellbaren Stab oder Spanngurt (44, 64) aufweist, das eingerichtet ist, am Fahrzeug mittelbar oder unmittelbar gegengelagert zu werden und auf die Matte eine Zugkraft ausübt, die quer zu den von dem mindestens einen hinteren und dem mindestens einen vorderen Spannelement ausgeübten Zugkräften wirkt.

7. Sitzanordnung nach einem der vorstehenden Ansprüche, **dadurch gekennzeichnet, dass** der mindestens eine vordere und der mindestens eine hintere Arm gelenkig und insbesondere feststellbar miteinander verbunden sind.

8. Sitzanordnung nach einem der vorstehenden Ansprüche, **dadurch gekennzeichnet, dass** die Länge des mindestens einen vorderen und/oder hinteren Arms verstellbar ist.

9. Sitzanordnung nach einem der vorhergehenden Ansprüche, **gekennzeichnet durch** mindestens einen den Arm (41, 61, 63) tragenden Pfosten 39, der ausgebildet ist, mittelbar oder unmittelbar am Fahrzeug und insbesondere am Chassis (30) des Fahrzeugs verankert zu werden.

10. Sitzanordnung nach einem der vorstehenden Ansprüche, **gekennzeichnet durch** mindestens einen längsseitigen, parallel zur Längsachse des Fahrzeugs angeordneten, insbesondere längenverstellbaren Gurt (46), der zwischen einer vorderen Stützfläche (42₁, 62₁) der Matte (42, 62), die durch das mindestens eine vordere Spannelement und das mindestens eine mittlere Spannelement (44, 64) definiert ist, und einer hinteren Stützfläche (42₂, 62₂) der Matte (42, 62), die durch das mindestens eine mittlere Spannelement (44, 64) und das mindestens eine hintere Spannelement definiert ist, verläuft.

11. Sitzanordnung nach einem der vorstehenden Ansprüche, **gekennzeichnet durch** seitliche Wandungen, die vorgesehen sind, um einem seitlichen Herausrutschen einer zu transportierenden Person aus der Sitzanordnung entgegenzuwirken.

12. Sitzanordnung nach Anspruch 11, **dadurch gekennzeichnet, dass** die mindestens eine seitliche Wandung aus einem insbesondere ziehharmonikaartig gefalteten und/oder elastischen Material besteht.

13. Sitzanordnung nach Anspruch 10 oder einem der darauf rückbezogenen Ansprüche 11 oder 12, **gekennzeichnet durch** mindestens einen zwischen dem längsseitigen Gurt (46) und einer Seitenkante einer der Stützflächen (42₁, 42₂, 62₁, 62₂) verlaufenden, insbesondere längenverstellbaren Gurt.

14. Sitzanordnung nach einem der vorstehenden Ansprüche, **gekennzeichnet durch** Feder- und/oder Dämpfungselemente im Bereich der Verankerung des mindestens einen Arms am Fahrzeug, mit denen vom Fahrzeug bzw. dem Anhänger auf die Sitzanordnung übertragene Stöße gedämpft bzw. abgefedert werden

15. Anhänger für ein Fahrzeug, insbesondere für ein Fahrrad oder ein Pedelec, mit einer Sitzanordnung nach einem der vorstehenden Ansprüche.

16. Lastenfahrrad mit einem Ladebereich und einer darin verankerten Sitzanordnung gemäß einem der Ansprüche 1 bis 15.

## Claims

1. Seat arrangement for the transport of persons, in particular babies, toddlers and children, in a passenger compartment of a vehicle, in particular a multifunctional bicycle trailer, having a mat (42, 62) and at least one rear tensioning element (43, 63, 66) which engages on a rear region of the mat in the direction of travel and is designed to be directly or indirectly counter-supported on the vehicle and to tension the mat in a longitudinal direction, at least one front tensioning element (41, 45, 61, 65) which engages a front region of the mat in the direction of travel and is designed to be directly or indirectly counter-supported on the vehicle and to tension the mat in a longitudinal direction, and at least one middle tensioning element (43, 63, 66), which is arranged to be indirectly or directly counter-supported on the vehicle and to exert on the mat a tensile force which acts transversely to the tensile forces exerted by the at least one rear tensioning element and the at least one front tensioning element, **characterized in in that** at least one front arm (41, 61) and/or rear arm (63) in the direction of travel is provided, which arm is anchored indirectly or directly, and in particular releasably, to the vehicle and can be pivoted about an axis running transversely with respect to the direction of travel, wherein a region of the front arm (41, 61) which is spaced apart from the pivot axis is connected to the region of the mat which is at the front in the direction of travel and/or a region of the rear arm (63) spaced apart from the pivot axis is connected to the rear region of the mat in the direction of travel, respectively.

2. Seat arrangement according to claim 1, **characterized in that** the front tensioning element and/or the rear tensioning element each has two arms which are components of a U-shaped bracket (41, 61, 63), a section connecting the two arms of the bracket (41, 61, 63) defining the front edge of the seat arrangement in the direction of travel and/or the rear edge of the seat arrangement in the direction of travel, respectively.

3. The seat assembly of claim 2, **characterized in that** the front and/or rear arm(s) are lockable in at least two different angular positions.

4. Seat arrangement according to one of the preceding claims, **characterized in that** the front tensioning element comprises at least one length-adjustable rod or tensioning strap (45, 65) which is connected to the front edge of the seat arrangement in the direction of travel and is arranged to be indirectly or directly counter-supported on the vehicle.

5. Seat arrangement according to one of claims 1 to 4, **characterized in that** the rear tensioning element comprises at least one length-adjustable rod or tensioning strap (43, 66) which is connected to the rear edge of the seat arrangement in the direction of travel and is arranged to be indirectly or directly counter-supported on the vehicle.

6. A seat assembly according to one of the preceding claims, **characterized in that** the middle tensioning element comprises at least one length-adjustable rod or tensioning strap (44, 64) adapted to be directly or indirectly counter-supported on the vehicle and exerting on the mat a tensile force transverse to the tensile forces exerted by the at least one rear tensioning member and the at least one front tensioning member.

7. Seat arrangement according to one of the preceding claims, **characterized in that** the at least one front arm and the at least one rear arm are connected to one another in an articulated and, in particular, lockable manner.

8. Seat arrangement according to one of the preceding claims, **characterized in that** the length of the at least one front and/or rear arm is adjustable.

9. Seat arrangement according to one of the preceding claims, **characterized by** at least one post 39 supporting the arm (41, 61, 63) and adapted to be anchored directly or indirectly to the vehicle and in particular to the chassis (30) of the vehicle.

10. Seat arrangement according to one of the preceding claims, **characterized by** at least one longitudinal belt (46) arranged parallel to the longitudinal axis of the vehicle, in particular adjustable in length, which is connected between a front support surface (42₁ , 62₁ ) of the mat (42, 62), which is defined by the at least one front tensioning element and the at least one middle tensioning element (44, 64), and a rear support surface (42₂ , 62₂ ) of the mat (42, 62), which is defined by the at least one middle tensioning element (44, 64) and the at least one rear tensioning element.

11. A seat assembly according to one of the preceding claims, **characterized by** lateral walls provided to counteract lateral slipping out of the seat assembly by a person to be transported.

12. Seat arrangement according to claim 11, **characterized in that** the at least one lateral wall consists of a material which is folded in particular in an accordion-like manner and/or is elastic.

13. Seat arrangement according to claim 10 or one of claims 11 or 12 referring thereto, **characterized by** at least one belt, in particular adjustable in length, extending between the longitudinal belt (46) and a side edge of one of the support surfaces (42₁ , 42₂ , 62₁ , 62₂ ).

14. Seat arrangement according to one of the preceding claims, **characterized by** spring and/or damping elements in the region of the anchorage of the at least one arm to the vehicle, by means of which shocks transmitted from the vehicle or the trailer to the seat arrangement are damped and/or cushioned

15. Trailer for a vehicle, in particular for a bicycle or a pedelec, comprising a seat arrangement according to one of the preceding claims.

16. A cargo bicycle having a loading area and a seat assembly anchored therein according to any one of claims 1 to 15.

## Revendications

1. Agencement de siège pour le transport de personnes, en particulier de bébés, de nourrissons et d'enfants, dans un habitacle d'un véhicule, en particulier d'une remorque de bicyclette multifonction, avec une natte (42, 62) et au moins un élément de tension arrière (43, 63, 66) qui s'accroche à un domaine arrière dans le sens de la marche de la natte et est conçu pour être supporté sur le véhicule indirectement ou directement et pour tendre la natte dans une direction longitudinale, au moins un élément de tension avant (41, 45, 61, 65) qui s'accroche à un domaine avant dans le sens de la marche de la natte et est conçu pour être supporté indirectement ou directement sur le véhicule et pour tendre la natte dans une direction longitudinale, ainsi qu'au moins un élément de tension intermédiaire (44, 64) qui est disposé pour être supporté sur le véhicule indirectement ou directement et exercer sur la natte une force de traction qui agit transversalement aux forces de tractions exercées par le au moins un élément de tension arrière et le au moins un élément de tension avant, **caractérisé en ce qu'**il est prévu au moins un bras avant (41, 61) et/ou arrière (63) dans le sens de la marche, qui est ancré indirectement ou directement et en particulier de manière amovible sur le véhicule, qui peut pivoter autour d'un axe s'étendant transversalement au sens de la marche, où un domaine du bras avant (41, 61) distant de l'axe de pivotement est relié avec le domaine avant dans le sens de la marche de la natte, ou un domaine du bras arrière (63) distant de l'axe de pivotement est relié avec le domaine arrière dans le sens de la marche de la natte.

2. Agencement de siège selon la revendication 1, **caractérisé en ce que** l'élément de tension avant et/ou l'élément de tension arrière comportent dans chaque cas deux bras, qui sont des composants d'un étrier en forme de u (41, 61, 63), où une section reliant les deux branches du support (41, 61, 63) définit le bord avant dans le sens de la marche de l'agencement de siège ou le bord arrière dans le sens de la marche de l'agencement de siège.

3. Agencement de siège selon la revendication 2, **caractérisé en ce que** le ou les bras avant et/ou arrière peuvent être immobilisés dans au moins deux positions angulaires différentes.

4. Agencement de siège selon l'une des revendications précédentes, **caractérisé en ce que** l'élément de tension avant comporte au moins une barre ou une sangle de tension réglable en longueur (45, 65) qui est reliée au bord avant dans le sens de la marche de l'agencement de siège et est disposée pour être supportée sur le véhicule indirectement ou directement.

5. Agencement de siège selon l'une des revendications 1 à 4, **caractérisé en ce que** l'élément de tension arrière comporte au moins une barre ou une sangle de tension réglable en longueur (43, 66) qui est reliée au bord arrière dans le sens de la marche de l'ensemble de siège, et est disposée pour être supportée sur le véhicule indirectement ou directement.

6. Agencement de siège selon l'une des revendications précédentes, **caractérisé en ce que** l'élément de tension intermédiaire comporte au moins une barre ou une sangle de tension réglable en longueur (44, 64) qui est disposée pour être supportée sur le véhicule indirectement ou directement et exerce sur la natte une force de traction qui agit transversalement aux forces de tractions exercées par le au moins un élément de tension arrière et le au moins un élément de tension avant.

7. Agencement de siège selon l'une des revendications précédentes, **caractérisé en ce que** le au moins un bras avant et le au moins un bras arrière sont reliés l'un à l'autre de manière articulée et en particulier de manière immobilisable.

8. Agencement de siège selon l'une des revendications précédentes, **caractérisé en ce que** la longueur du au moins un bras avant et/ou arrière est réglable.

9. Agencement de siège selon l'une des revendications précédentes, **caractérisé par** au moins un montant 39 portant le bras (41, 61, 63), qui est conçu pour être ancré indirectement ou directement sur le véhicule et en particulier sur le châssis (30) du véhicule.

10. Agencement de siège selon l'une des revendications précédentes, **caractérisé par** au moins une sangle (46) longitudinale, disposée parallèlement à l'axe longitudinal du véhicule, en particulier réglable en longueur, qui s'étend entre une surface de soutien avant (42₁, 62₁) de la natte (42, 62), qui est définie par le au moins un élément de tension avant et le au moins un élément de tension intermédiaire (44, 64), et une surface de soutien arrière (42₂, 62₂) de la natte (42, 62), qui est définie par le au moins un élément de tension intermédiaire (44, 64) et le au moins un élément de tension arrière.

11. Agencement de siège selon l'une des revendications précédentes, **caractérisé par** des parois latérales qui sont prévues pour s'opposer à un glissement latéral d'une personne à transporter hors de l'agencement de siège.

12. Agencement de siège selon la revendication 11, **caractérisé en ce que** la au moins une paroi latérale consiste en un matériau en particulier plié en accordéon et/ou élastique.

13. Agencement de siège selon la revendication 10 ou l'une des revendications 11 ou 12 qui en dépendent, **caractérisé par** au moins une sangle en particulier réglable en longueur, qui s'étend entre la sangle longitudinale (46) et un bord latéral de l'une des surfaces de soutien (42₁, 42₂, 62₁, 62₂).

14. Agencement de siège selon l'une des revendications précédentes, **caractérisé par** des éléments de ressort et/ou d'amortissement dans le domaine de l'ancrage du au moins un bras sur le véhicule, avec lesquels les chocs transmis par le véhicule ou la remorque à l'agencement de siège sont amortis ou atténués.

15. Remorque pour un véhicule, en particulier pour une bicyclette ou un Pedelec, avec un agencement de siège selon l'une des revendications précédentes.

16. Bicyclette cargo avec un domaine de chargement et un agencement de siège selon l'une des revendications 1 à 15 ancré dans celui-ci.
